# FASCICULE DE BREVET EUROPEEN

(11) **EP 1 690 806 B1**
(45) Date de publication et mention de la délivrance du brevet: **19.03.2008**
(21) Numéro de dépôt: 05002929.7
(22) Date de dépôt: 11.02.2005
(51) Int. Cl.: B65D 81/18, B65D 81/26, F25D 3/08

(54) **Emballage réfrigérant**
Kühlende Verpackung
Cooling packaging

(43) Date de publication de la demande: 16.08.2006
(73) Titulaire: Keepfreeze S.A., 1204 Geneve (CH)
(72) Inventeur: Ribeiro, Sylvie, 92100 Boulogne (FR)
(74) Mandataire: Thibon-Littaye, Annick

(56) Documents cités:
- GB-A- 2 318 633
- US-A- 3 320 075
- US-A- 4 892 226
- US-A- 5 135 787
- US-A- 5 290 580
- US-A1- 2003 126 882

## Description

La présente invention concerne la conception et la réalisation d'un emballage réfrigérant destiné au transport de marchandises sensibles à la chaleur. Dans ses applications industrielles, elle s'adresse principalement aux produits alimentaires qui se vendent frais et qui doivent être conservés au froid jusqu'au moment de la vente, en particulier quand, en plus, il s'agit de denrées qu'il est nécessaire ou seulement souhaitable de présenter à la vente réparties sur un lit de glace.

L'invention s'applique en particulier aux produits frais du type des poissons, crustacés et autres fruits de mer. On sait que ces produits sont conservés en permanence sur une couche de glace, non seulement à cause des normes s'appliquant à leur distribution, mais également par habitude de la part des professionnels, la présence d'une couche de glace étant synonyme pour beaucoup, et plus particulièrement dans le domaine des produits de poissonnerie, d'un gage de fraîcheur des produits. La conservation sur de la glace pilée permet en effet de maintenir un contact direct du froid avec le produit, sur une surface importante de celui-ci, à une température qui est celle de la glace fondante, généralement comprise entre 3°C et 5°C, ce quelle que soit l'atmosphère environnante. Cependant, pour que l'effet recherché soit pleinement assuré, il convient d'éviter que les produits en question soient amenés à baigner dans l'eau pouvant être générée par la fonte de toute ou partie de la glace.

On notera à ce sujet que même si, grâce à des parois isolantes, la température à l'intérieur de la boîte reste suffisamment basse pour que la fonte de la glace soit minime au cours du transport, les poissons baignent dans l'eau liquide qui est tout de même générée par le fait que les poissons dégorgent progressivement une partie de l'eau qu'ils contiennent. Leur aspect se dégrade et ils commencent à pourrir. Il peut également arriver qu'il y ait des fuites si la boîte n'est pas suffisamment étanche, d'où des problèmes sanitaires pour les transporteurs.

Pour essayer de remédier à ces problèmes, les poissons sont actuellement le plus souvent transportés dans des caisses, ou boîtes, dont les parois sont constituées en un matériau thermiquement isolant, notamment en un matériau polymère poreux. On connait en particulier des boîtes en polystyrène, qui malgré leur porosité, peuvent être rendues étanches à l'eau par doublage par un film de polyéthylène. Dans d'autres cas, il a été proposé de compléter de telles boîtes par un élément absorbant disposé à l'intérieur de la boîte de manière à absorber l'eau libérée à l'état liquide. On se réfère ici en particulier au document de brevet US 3320075, qui prévoit de diviser un conteneur en deux compartiments distincts, l'un retenant la glace solide, l'autre contenant un matériau qui absorbe l'eau liquéfiée.

On connait aussi, notamment du document de brevet US 5135787, des conteneurs de denrées alimentaires qui utilisent comme source de froid, non plus de la glace d'eau à l'état solide, mais de la neige carbonique. Il est alors prévu une couche absorbante évitant que l'eau dégorgée des denrées vienne humidifier la neige carbonique.

Aucune des solutions ainsi proposées à ce jour n'apporte une solution satisfaisante au problème que la présente invention permet de résoudre. En effet, grâce à la combinaison de deux sources de froid différentes au sein du même conteneur, l'invention permet d'assurer de manière efficace la conservation au sec et au froid des produits depuis le lieu d'emballage jusqu'au lieu de vente et de les exposer en vente sur lit de glace, dans le même emballage. Il n'est plus besoin de les transvaser, ni entre des étapes successives du transport, ni à l'arrivée sur le lieu de vente, et lors de l'exposition en vente, on profite des mêmes avantages que pendant le transport, c'est-à-dire un bon maintien du froid et l'absence d'eau liquide au contact des produits.

L'invention se traduit en un emballage tel que défini principalement par la revendication 1 ci-après, et secondairement par les revendications qui en dépendent. Elle se traduit également par un procédé tel qu'il est également défini par les revendication ci-après.

Conformément à l'invention, c'est essentiellement l'élément amovible inférieur qui présente une capacité réfrigérante quand les particules de polymère absorbant qui le constitue pour l'essentiel sont activées, c'est-à-dire gonflées d'eau. L'élément est alors apte à produire du froid par désorption et vaporisation de l'eau initialement absorbée, par opposition avec la simple isolation thermique que peuvent assurer des matériaux formant une barrière aux calories.

Dans l'emballage fabriqué suivant l'invention, l'élément supérieur a principalement pour fonction d'absorber l'eau libérée par la fonte de la glace au cours du transport des produits depuis le lieu d'emballage jusqu'au lieu d'exposition des produits en vente. Mais il participe aussi à la production de froid après qu'il ait rempli sa fonction d'absorption. L'élément inférieur a lui principalement pour fonction de maintenir les produits au froid par désorption d'eau quand le conteneur est ouvert pour exposition des produits à la vente. Il peut aussi participer à l'absorption d'eau en complément de l'élément supérieur.

Dans des modes de mise en oeuvre particuliers de l'invention, les particules Dans des modes de mise en oeuvre particuliers de l'invention, les particules de polymère absorbant présentes dans l'élément inférieur (essentiellement producteur de froid) et dans l'élément supérieur (essentiellement absorbeur pour l'eau liquéfiée à partir de la glace initialement introduite dans l'emballage) peuvent être de nature similaire, éventuellement même de nature identique. En différence essentielle entre les deux éléments (donc entre les deux couches amovibles constituées et fabriquées de manière similaire, sinon identique), il vient alors le fait que les denrées à transporter et exposer en vente sont mises en place dans l'emballage sur les deux couches superposées, parmi lesquelles la couche inférieure est activée, ayant été préablablement gonflée d'eau, alors que la couche supérieure est sèche et prête à absorber l'eau libérée de la glace en cours de liquéfaction.

Les polymères absorbants dont l'invention tire profit, du fait de leurs propriétés d'absorption et désorption d'eau, sont en eux-mêmes connus. De manière également connue pour des polymères absorbants de ce type particulièrement avantageux dans le cadre de la mise en oeuvre de l'invention, les particules de polymère présentent une forte capacité d'absorption d'eau liquide qui est alliée à une tendance sensible à retenir l'eau absorbée quand elle est sous forme liquide pour n'autoriser sa désorption qu'en passant par l'état vapeur.

On sait aussi expliquer le fonctionnement des polymères absorbants de ce genre dans leur effet réfrigérant. Les particules sèches de polymère occupent un faible volume, et gonflent en absorbant l'eau, pour former un gel. Le polymère absorbant conserve ensuite la température de l'eau absorbée durant une longue période. En effet, en cas d'apport extérieur de chaleur, l'eau sous forme liquide se vaporise et elle absorbe pour cela de l'énergie, en correspondance avec sa chaleur de vaporisation. Ce phénomène entraîne un refroidissement, et le polymère conserve la température initiale de l'eau qu'il a absorbée durant une longue période.

Dans l'emballage suivant l'invention, l'élément inférieur est mise en place au fond du conteneur sous une forme telle que les particules de polymère qu'il contient se trouvent dans leur état activé, c'est-à-dire ayant absorbé de l'eau. Il est souhaitable qu'elles aient en outre subi un refroidissement. Le refroidissement est de préférence effectué dans un congélateur, de façon que l'eau absorbée se trouve sous forme congelée. Par conséquent, en cas de réchauffement de l'atmosphère, la chaleur de décongélation s'ajoute à la chaleur de vaporisation, d'où une capacité réfrigérante d'autant plus efficace du polymère lors d'un réchauffement provoquant la désorption de l'eau absorbée. Quand la matière absorbante de l'élément supérieur est faite de particules de même type, cet élément devient lui aussi à capacité réfrigérante par désorption d'eau après que ses particules soient devenues gonflées d'eau en retenant l'eau libérée par la fonte de la couche de glace, plus éventuellement l'eau dégorgée par les produits pendant le transport de l'ensemble. De façon avantageuse, l'eau absorbée est retenue de manière durable dans les particules de polymère, et elle ne peut s'en échapper que sous forme de vapeur. Dans un tel cas, il se produit un effet de refroidissement supplémentaire, et un maintien plus efficace d'une température basse à l'intérieur du conteneur.

Conformément à l'invention, l'élément inférieur et l'élément supérieur contiennent tous deux des particules de polymère absorbant qui ont les mêmes propriétés, mais leur rôle est différent, et directement lié à leur configuration particulière et à leur position spécifique dans le conteneur. L'élément inférieur, qui est positionné dans le conteneur de manière à former une doublure de sa paroi de fond, est utilisé pour sa fonction réfrigérante. L'élément supérieur, qui est placé au-dessus de l'élément inférieur et qui reçoit la couche de glace, a un premier rôle d'absorption des liquides, et un rôle secondaire de refroidissement supplémentaire. La superposition dans cet ordre précis des deux éléments au fond du conteneur permet ainsi d'obtenir des résultats tout à fait avantageux, tant du point de vue de la capacité réfrigérante globale de l'emballage, que du point de vue du maintien au sec des produits emballés.

Par ailleurs, lorsque l'eau contenue dans les particules de polymère de l'élément inférieur se vaporise, elle est désorbée, et elle s'échappe de l'élément inférieur dans l'atmosphère intérieure du conteneur. Elle peut traverser, toujours sous forme de vapeur, l'élément supérieur. Elle entre ensuite en contact avec la couche de glace, dont la température provoque sa condensation. Revenue à l'état liquide, elle est alors absorbée, de la même façon que l'eau issue de la fusion de la glace, dans l'élément supérieur et elle active les particules de polymère qui s'y trouvent.

Ainsi, l'eau désorbée de l'élément inférieur retrouve son effet activant de la fonction réfrigérante dans l'élément supérieur, et on n'a pas, ou du moins peu de perte du potentiel réfrigérant global de l'ensemble des deux éléments. Cette coopération entre l'élément inférieur et l'élément supérieur ajoute encore à l'efficacité réfrigérante de l'emballage.

De plus, si l'eau qui est absorbée par l'élément supérieur au cours de l'utilisation de l'emballage est amenée à se vaporiser sous l'effet d'un réchauffement extérieur, et qu'elle s'échappe de cet élément, elle est de même condensée au contact de la glace, et absorbée de nouveau par l'élément supérieur. L'ensemble fonctionne ainsi en circuit fermé, avec optimisation de l'effet activant, sur les particules de polymère, des molécules d'eau initialement introduites dans l'emballage.

Par ailleurs, l'invention assure que les transferts thermiques entre les particules de polymère de l'élément inférieur et de l'élément supérieur, et les produits à l'intérieur du conteneur, y compris la glace, soient favorisés.

Ainsi, l'élément inférieur suivant l'invention est constitué de telle sorte que sa paroi supérieure, qui entre en contact avec l'élément supérieur, soit thermiquement conductrice, de façon à assurer les transferts thermiques entre les particules de polymère qu'il contient et l'élément supérieur.

De plus, l'élément supérieur est avantageusement conçu de manière à ne pas constituer un frein aux échanges thermiques entre l'élément inférieur sur lequel il repose et l'atmosphère intérieure du conteneur, mais au contraire à les favoriser. Ainsi, les matériaux qui entrent dans sa constitution sont choisis pour être de bons conducteurs thermiques.

Dans un mode de réalisation préféré de l'invention, les particules de polymère contenues dans l'élément supérieur sont présentes en quantité telle, et possèdent une capacité d'absorption telle qu'elles sont aptes à absorber toute l'eau issue de la fonte complète de la couche de glace, plus éventuellement celle dégorgée par le produit à transporter. Il est toutefois préférable que la quantité de glace initialement introduite dans le conteneur soit largement supérieure à celle qui sera consommée par fusion à l'état d'eau liquide au cours du transport de l'emballage fermé. On assure ainsi qu'il subsiste un lit de glace sur lequel reposent les produits quand ils sont présentés à la vente dans le même emballage une fois ouvert.

Suivant d'autres caractéristiques avantageuses de l'invention, l'élément inférieur et l'élément supérieur sont constitués de telle sorte que l'on ait une répartition homogène des particules de polymère contenues dans chacun d'entre eux, sur toute leur surface doublant le fond du conteneur.

Ainsi, dans un mode de réalisation préféré de l'invention, les parois de l'élément inférieur sont assemblées de manière à former une pluralité de compartiments de forme allongée à l'intérieur desquels sont distribuées de façon sensiblement uniforme les particules de polymère absorbant. La concentration des particules à l'intérieur des compartiments et les dimensions de chaque compartiment sont avantageusement choisies de telle que sorte que les particules de polymère à l'état complètement gonflé occupent la totalité du volume de chaque compartiment. Les particules gonflées d'eau ne disposent alors d'aucune liberté de mouvement à l'intérieur de l'élément, et un froid homogène est assuré sur tout la surface de l'élément inférieur constituant une doublure pour le fond du conteneur.

L'élément supérieur contient des particules de polymère absorbant initialement à l'état sec et il est avantageusement constitué de telle sorte qu'il reste un volume libre à l'intérieur des parois qui le délimitent pour permettre le gonflement des particules par absorption d'eau. Afin d'éviter que les particules à l'état sec, qui sont de ce fait susceptibles de bouger à l'intérieur du volume délimité par les parois, ne se concentrent dans un coin de l'élément, dans des modes de réalisation préférés de l'emballage suivant l'invention, l'élément supérieur comporte des moyens pour maintenir en son intérieur une répartition uniforme des particules de polymère aptes à absorber l'eau. L'invention prévoit notamment d'utiliser de la colle pour priver les particules à l'état sec de liberté de mouvement, de sorte qu'elles constituent une couche uniforme qui tapisse le fond du conteneur, assurant ainsi une capacité d'absorption d'eau homogène sous la couche de glace. Cette caractéristique particulièrement avantageuse de l'élément supérieur lui confère également une rigidité qui permet d'éviter que l'élément ne se plisse ou ne se déplace avant ou pendant que l'on met la glace en place au-dessus de lui. La colle utilisée est choisie soluble dans l'eau, de manière à ne pas gêner, ensuite, l'absorption de l'eau par les particules.

Dans un mode de réalisation préféré de l'invention, les parois délimitant l'élément inférieur ou l'élément supérieur, de préférence les deux, sont souples, si bien qu'elles s'effondrent sur elles-mêmes lorsque les particules de polymère qu'elles contiennent sont à l'état sec. De façon tout à fait avantageuse, il en résulte que dans la pratique industrielle, l'élément inférieur et l'élément supérieur sont livrés à l'utilisateur sous une forme aplatie et flexible, de faible encombrement stérique, avec les particules de polymère à l'état sec pour l'un et l'autre.

Suivant une caractéristique avantageuse de l'invention, l'élément inférieur et l'élément supérieur se présentent respectivement chacun sous forme d'une bande aplatie, de préférence présentée en rouleau, comportant une pluralité d'éléments reliés entre eux par des lignes de découpe prédéfinies. Chacun des éléments est à découper, et à disposer au fond du conteneur, après activation préalable des particules de polymère de l'élément inférieur. Les lignes de découpe sont notamment constituées par des lignes de soudure continues entre deux couches d'enveloppe enfermant les particules.

Suivant d'autres caractéristiques avantageuses de l'invention, les parois de l'enveloppe enfermant les particules de polymère absorbant de l'élément inférieur et/ou l'élément supérieur sont constituées d'un seul même matériau à caractère hydrophile et thermiquement conducteur. Ce matériau est notamment constitué de fibres de polypropylène et de fibres cellulosiques telles que la viscose. Ceci permet en particulier que les parois laissent passer l'eau sans la retenir. Il en résulte également un avantage pour les éléments inférieur et supérieur ainsi constitués, puisque leurs parois supérieure et inférieure sont identiques et de mêmes propriétés de conduction thermique. De ce fait, l'utilisateur n'a pas à se soucier de respecter un sens de disposition de chacun des éléments dans le conteneur. L'usage de l'emballage suivant l'invention en est d'autant plus facilité.

Dans un mode de réalisation particulièrement favorable à la pratique industrielle, le même matériau constitue les parois à la fois de l'élément inférieur et de l'élément supérieur.

L'emballage réfrigérant suivant l'invention peut avantageusement être utilisé pour le transport de produits à conserver sur de la glace, notamment pour celui de denrées alimentaires et plus particulièrement celui des produits de poissonnerie.

Suivant un mode de mise en oeuvre particulièrement avantageux, son procédé de préparation comprend :
- la fabrication d'une bande formant une pluralité d'éléments inférieurs reliés entre eux par des lignes de découpe prédéfinies, les particules de polymère de chaque élément se trouvant à l'état sec,
- la fabrication d'une bande formant une pluralité d'éléments supérieurs reliés entre eux par des lignes de découpe prédéfinies, les particules de polymère de chaque élément se trouvant à l'état sec,
- la découpe d'un élément inférieur et d'un élément supérieur respectivement à partir de chacune des bandes et suivant les lignes de découpe,
- l'activation des particules de polymère de l'élément inférieur par immersion de l'élément dans l'eau et le refroidissement de l'élément ainsi imprégné d'eau à température de congélation,
- la disposition de l'élément inférieur ainsi activé à l'intérieur du conteneur, de manière à constituer une double-paroi à capacité réfrigérante occupant au moins la paroi de fond du conteneur,
- et la disposition de l'élément supérieur, sans activation préalable du polymère qu'il contient, sur l'élément inférieur, de manière à constituer une couche de fond pour le conteneur destinée à recevoir la couche de glace et capable d'absorber l'eau issue de la fonte de la glace, plus celle éventuellement dégorgée par le produit à transporter, et d'agir ensuite éventuellement par production de froid après absorption de cette eau.

Les deux bandes pour éléments inférieurs et pour éléments supérieurs sont fabriquées en usine et livrées en rouleaux continus lovés, et les étapes suivantes sont effectuées sur le site d'emballage.

L'invention sera maintenant plus complètement décrite dans le cadre de caractéristiques préférées et de leurs avantages, en faisant référence à la figure unique qui illustre cette description par une vue en coupe d'un emballage suivant l'invention, montrant une couche de glace disposée en son intérieur pour recevoir des poissons.

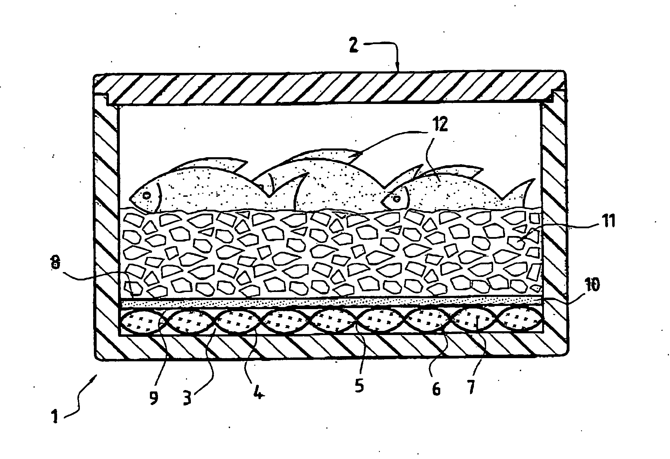

L'emballage suivant l'invention représenté sur la figure 1 est composé d'un conteneur 1 à capacité d'isolation thermique, tel qu'une boîte de polystyrène expansé. Le conteneur 1 présente une forme parallélépipédique et il comporte en particulier un couvercle amovible 2 qui permet sa fermeture de façon à éviter les pertes thermiques.

Au fond du conteneur 1 est disposé un élément inférieur 3, qui n'en est pas solidaire, et qui consiste en une poche délimitée par des parois perméables 4. L'élément 3 couvre tout le fond du conteneur 1. Les parois opposées inférieure et supérieure de la poche 3 sont assemblées en plusieurs endroits par des soudures longitudinales 5 perpendiculaires au plan de coupe de la figure 1, de manière à former des compartiments de forme allongée 6. L'assemblage peut également être réalisé par exemple au moyen de coutures longitudinales.

Chacun des compartiments 6 contient une quantité sensiblement égale de particules de polymère absorbant 7 qui ont été préalablement activées par immersion de l'élément 3 dans l'eau et éventuellement refroidissement. Ces particules ont la capacité de conserver durablement la température de l'eau qu'elles ont absorbée, en exploitant la chaleur de vaporisation nécessitée par cette eau pour se vaporiser sous l'effet d'une augmentation de la température ambiante. L'élément 3 présente ainsi une forte capacité réfrigérante. De façon tout à fait avantageuse, on utilise des particules de polyacrylate de sodium, qui possèdent une capacité d'absorption d'environ 30 fois leur volume. Ces particules présentent également l'avantage d'être dépourvues de toxicité.

La quantité de particules 7 contenue dans chacun des compartiments 6 est telle que lorsque les particules 7 sont toutes complètement gonflées d'eau, elles occupent tout le volume de chacun des compartiments 6. Du fait de la répartition homogène des particules 7 dans les différents compartiments 6, une surface de froid uniforme est obtenue sur tout le fond du conteneur 1.

Les parois 4 de l'élément inférieur 3 sont avantageusement constituées d'un matériau hydrophile, de manière à permettre le passage de l'eau sous forme liquide lors de la phase d'activation des particules 7 par absorption d'eau, et sous forme vapeur lors de l'étape de désorption d'eau par les mêmes particules. Le matériau utilisé présente également les avantages suivants : il est un bon conducteur thermique, de manière à favoriser les échanges thermiques entre les particules 7 contenues dans l'élément 3 et l'environnement extérieur à cet élément ; il présente un bonne résistance à la pression exercée sur les parois 4 par les particules de polymère 7 qui ont subi une augmentation volumique lors de l'absorption d'eau, si bien que le risque de déchirure des parois 4 est très réduit. De façon tout à fait avantageuse, le matériau constituant les parois 4 est un mélange de 85% de fibres de polypropylène et de 15% de fibres de viscose, avec un poids de 65 g/m².

Sur l'élément inférieur 3 est disposé un élément supérieur 8 qui le recouvre complètement. Cet élément est formé d'une poche délimitée par des parois perméables 9, et qui contient des particules d'un polymère absorbant 10. Les particules 10 sont maintenues réparties de façon homogène dans cette poche, de telle sorte qu'elles forment une couche uniforme sur le fond du conteneur 1. Cette couche confère une relative rigidité à l'élément 8.

Les particules de polymère 10 présentent des propriétés d'absvrption-désorption similaires à celles des particules 7, c'est-à-dire une forte capacité d'absorption d'eau et de maintien de la température de l'eau absorbée, par production de froid par vaporisation et désorption de l'eau absorbée. Le polymère choisi est avantageusement le même que le polymère contenu dans l'élément inférieur 3, et préférentiellement un polyacrylate de sodium.

De même, le matériau constituant les parois 9 de l'élément supérieur 8 possède des caractéristiques analogues à celui des parois 4 de l'élément inférieur 3. Les deux matériaux utilisés sont préférentiellement les mêmes, notamment dans les deux cas constitués d'un mélange de 85% de fibres de polypropylène et de 15% de fibres de viscose, avec un poids de 65 g/m².

La quantité de particules de polymère 10 contenues dans l'élément supérieur 8 est supérieure à la quantité nécessaire pour absorber toute l'eau issue de la fonte de la glace, du moins toute celle qui risque de se libérer au cours du transports des produits emballés jusqu'au lieu de vente. Ceci permet de toujours conserver une capacité d'absorption résiduelle de sécurité.

Dans un mode de réalisation préféré de l'invention, la concentration de particules polyrnériques 10 contenues dans l'élément supérieur 8 est ainsi d'environ 250 g/m², ce qui permet de supporter une hauteur de glace d'environ 10 cm.

Le maintien des particules 10 de l'élément supérieur 8 en une couche uniformément répartie est assuré par tout moyen approprié qui sera aisément identifié par l'homme du métier, en gardant bien à l'esprit le fait que l'élément supérieur 8, tout comme les autres constituants de l'emballage suivant l'invention, ne doit présenter aucune toxicité. De plus, le besoin de rigidité à l'intërieur de l'élément supérieur 8 est surtout nécessaire lorsque les particules sont à l'état sec, et avant la disposition de la couche de glace. En effet, la glace une fois en place maintient par son poids une pression suffisante sur l'élément supérieur 8 pour empêcher tout déplacement des particules 10. Par ailleurs, les particules en gonflant sous l'effet de l'absorption d'eau occupent un volume plus important, et disposent alors de d'autant moins d'espace pour se déplacer à l'intérieur de l'élément 8.

Par exemple, suivant une caractéristique préférée de l'invention, les parois de l'élément supérieur 8 sont assemblées par une pluralité de points de soudure de manière à assurer le maintien d'une répartition uniforme, à l'intérieur de l'élément supérieur 8, des particules de polymère 10 aptes à absorber l'eau.

Suivant une autre caractéristique avantageuse, les particules de polymère 10 aptes à absorber l'eau contenues dans l'élément supérieur 8 sont maintenues uniformément réparties à l'intérieur de l'élément 8 par collage des particules 10 les unes aux autres. Le collage est réalisé de manière telle qu'il est détruit par contact avec l'eau froide, si bien qu'il n'empêche pas les particules de polymère 10 de gonfler par absorption d'eau. Il est alors nécessaire d'assurer que le polymère et le matériau constituant les parois 9 soient compatibles avec les conditions de collage.

Sur la figure 1, l'emballage suivant l'invention est représenté avec une couche de glace 11 qui est étalée sur l'élément supérieur 8, qui supporte des poissons 12.

Les étapes de la préparation de l'emballage suivant l'invention seront maintenant décrites.

Les éléments inférieur 3 et supérieur 8 sont avantageusement livrés respectivement sous forme d'une bande plate de largeur constante, disposée en rouleau, comportant chacune une pluralité d'éléments reliés l'un à l'autre, de préférence en une succession linéaire, par des lignes de soudure continues. Chaque élément contient des particules de polymère à l'état sec. Les lignes de soudure sont disposées à intervalles réguliers, si bien que les éléments sont sensiblement tous de la même taille.

Le conteneur 1 est un conteneur standard utilisé de façon classique, et en cela même l'invention apparaît comme tout à fait avantageuse, puisque l'utilisateur découpe, au moment de l'utilisation, un élément inférieur 3 unitaire, ou un ensemble d'éléments reliés entre eux, de dimensions adaptées à celles du conteneur dont il dispose. Le même procédé s'applique pour l'élément supérieur 8. Ainsi, les bandes d'éléments ont de préférence la largeur standard des conteneurs classiques, le plus souvent 20 cm, et les lignes de découpe sont situées par exemple tous les 40 cm, la longueur des conteneurs standards étant généralement égale à un multiple de 40 cm ou de 60 cm.

Les éléments inférieur 3 et supérieur 8 (ou des ensembles de tels éléments identiques) sont découpés au moment de l'utilisation. Les lignes de découpe sont avantageusement conçues de manière à éviter les fuites de polymère à leur niveau lors de la découpe. Elles sont notamment constituées de lignes de soudure corrtinues.

L'activation de la capacité réfrigérante de l'élément inférieur 3 est ensuite réalisée. A cet effet, l'élément est placé dans un bain d'eau durant environ 1 minute, puis éventuellement refroidi au congélateur durant 1h30. Cette rapidité d'activation de la fonction réfrigérante est particulièrement avantageuse. L'élément inférieur 3 est ensuite disposé au fond du conteneur 1.

L'élément supérieur 8 est posé au-dessus de l'élément inférieur 3, les particules de polymère qu'il contient étant à l'état sec. Une couche de glace 11 est étalée sur l'élément supérieur 8, et elle reçoit les produits 12 à transporter. Le conteneur 1 est finalement fermé par son couvercle 2.

Au cours du transport, l'élément inférieur 3 maintient dans le conteneur 1 une température sensiblement égale à celle de l'eau absorbée dans les particules qu'il contient. En cas d'élévation de la température, les molécules d'eau se vaporisent, et pour cela absorbent une énergie égale à leur chaleur de vaporisation. Ce phénomène induit un refroidissement à l'intérieur du conteneur 1.

Par ailleurs, dans le même temps, il peut se produire une fonte d'une partie de la glace. Les produits transportés, s'il s'agit par exemple de poissons, sont également susceptibles de dégorger une partie de l'eau qu'ils contiennent. Dans ces deux cas, l'eau générée est absorbée par les particules de polymère 10 contenues dans l'élément supérieur 8. On observe une augmentation de l'épaisseur de l'élément supérieur 8, qui peut quasiment atteindre un facteur 10. Il est raisonnable de penser que les particules de polymère les plus proches de la couche de glace gonflent les premières. De ce fait, les produits transportés ne baignent pas dans l'eau. De plus, l'eau froide absorbée par les particules 10 active celles-ci, qui peuvent alors si nécessaire exercer un effet de refroidissement similaire à celui des particules 7 contenues dans l'élément inférieur 3. Ceci permet d'obtenir une capacité réfrigérante de l'emballage accrue, en combinaison avec l'effet de l'élément inférieur 3.

Les particules 10 contenues dans l'élément supérieur 8 absorbent également l'eau qui s'est échappée de l'élément inférieur 3 suite à sa vaporisation et à sa désorption des particules 7, et qui a tendance à se condenser dans le conteneur 1, notamment au contact de la glace, pour se déposer sur la paroi de fond du conteneur constituée par l'élément supérieur 8.

Ainsi, un froid durable est généré dans l'emballage. De plus, l'eau sous forme liquide qui s'y forme est intégralement absorbée par l'élément supérieur 8, il n'y a donc pas de dégradation des produits transportés.

A la fin de l'utilisation, l'élément inférieur 3 et l'élément supérieur 8 peuvent, grâce à l'absence de toxicité des matières qui les constituent, être évacués par le dispositif d'évacuation des déchets habituel.

Suivant une caractéristique avantageuse de l'invention, les matériaux qui constituent les parois des éléments et les polymères sont tels qu'ils peuvent être régénérés après utilisation, les éléments peuvent donc servir plusieurs fois. Cependant, s'il est possible de réactiver l'élément inférieur à tout moment par immersion dans l'eau et éventuellement refroidissement, il est nécessaire, pour que l'élément supérieur soit à nouveau opérationnel, que les particules de polymère qu'il contient retrouvent leur état sec. A cause même des propriétés du polymère qui sont particulièrement avantageuses pour l'invention, le processus de désorption de l'eau contenue dans les particules est lent, et ce même à température ambiante. Ainsi, la régénération de l'élément supérieur est relativement longue. Il peut alors souvent s'avérer plus rentable de jeter l'élément supérieur et d'en utiliser un neuf pour chaque nouvelle utilisation.

En pratique, l'emballage suivant l'invention permet, exposé à une température extérieure de 24°C, de maintenir une température intérieure dans le conteneur comprise entre 3°C et 5°C pendant plus de huit heures. A cette température, on observe que la fonte de la glace a été très limitée, et que l'élément supérieur a très peu augmenté de volume. La capacité réfrigérante de l'élément inférieur suivant l'invention est donc très efficace, cependant que la présence de l'élément supérieur demeure un gage de sécurité pour le cas où des conditions de température extérieure extrêmes se présenteraient. Elle évite également qu'il subsiste toute trace de liquide à l'intérieur du conteneur.

A titre d'exemple de réalisation de caisses ou boîtes industrielles destinées à l'emballage de denrées alimentaires fraîches pour le transport et la présentation à la vente, on peut donner les indications dimensionnelles ci-après, en faisant référence à la constitution générale de la figure jointe.

Que ce soit pour des poissons ou pour des crustacés, on prévoit par exemple d'utiliser un conteneur de dimensions normalisées 600 mm x 400 mm x 200 mm réalisée avec des parois en polystyrène expansé comme il est en soi classique. Ce matériau présente de bonnes propriétés d'isolation thermique, sans être pour autant nécessairement étanche. Si les denrées à transporter sont des crustacés vivants, on a intérêt à utiliser la forme de réalisation de la boîte telle que représentée. Dans ce cas, une fois le couvercle 2 ôté, les crustacés sont visibles de l'acheteur potentiel sur le lieu de vente, mais les parois latérales de la boîte les empêchent de s'échapper hors du lit de glace pilée 11. Dans le cas de poissons morts, on aura au contraire plus intérêt à former le couvercle amovible 2 de façon solidaire à une partie supérieure des parois latérales.

Dans les conditions les plus usuelles d'utilisation, une telle boîte est destinée à recevoir un poids de 12 à 15 kg des denrées en question, ensemble avec un poids de l'ordre de 2 kg de glace pilée. Le transport est supposé avoir lieu dans des conditions d'environnement et de durée telles que la moitié de cette quantité de glace est susceptible de fondre au cours du transport alors que l'autre moitié restera présente sous et/ou autour des poissons sur le lieu de vente.

L'élément 8 de l'emballage est donc constitué et dimensionné de manière à être capable d'absorber au moins 1 d'eau répartie sur toute sa surface. On satisfait à ces conditions par exemple en répartissant dans la couche 10 un poids de 54 g du polymère absorbant décrit ci-dessus à l'état sec. Une fois gonflée par absorption d'eau pendant le transport, la même couche présente une épaisseur au maximum de 1,5 cm. Il y subsiste des particules sèches qui seront capables d'absorber de l'eau pendant l'exposition des produits à la vente, celle provenant du lit de glace qui continue à fondre, celle aussi qui se dégage de l'élément inférieur quand celui-ci est opérant en production de froid par désorption d'eau hors des particules gonflées.

L'élément inférieur 3 est constitué de manière différente. Lors des opérations d'emballage proprement dites, il est d'abord imprégné d'eau par activation des particules de polymère, et en plus refroidi à une température de congélation de l'eau absorbée. De manière préférentielle, la quantité de polymère incorporée dans l'enveloppe de l'élément est supérieure à celle qui serait suffisante, mais juste suffisante, pour remplir complètement l'enveloppe une fois à l'état gonflé d'eau. En d'autres termes, la quantité de polymère est avantageusement telle qu'une fois l'élément gorgé d'eau au maximum, le polymère est activé pour seulement 80 % des particules qui constituent l'ensemble. La quantité complémentaire de 20 % reste disponible pour absorber de l'eau venant au contact de sa surface depuis l'extérieur, en particulier celle qui traverserait la couche de l'élément supérieur sans y être absorbée.

L'épaisseur de l'élément 3 à l'état gonflé est alors de 3 cm. Dans un exemple particulier de réalisation conforme à l'invention, on peut notamment constituer l'élément 3 de 27 boudins longiformes contenant chacun 2 g de polymère absorbant, l'ensemble étant imprégné de 3,5 l d'eau lors de la fabrication de l'emballage.

On notera que la constitution des parois de la boîte en elles-mêmes joue un rôle dans le fonctionnement optimal de l'emballage. En cours de transport c'est leur rôle d'isolant thermique qui prime, tout le temps que l'élément supérieur 8 fonctionne en absorption de l'eau liquide résultant de la fusion de la glace. Une fois la boite ouverte sur le lieu de vente, les parois en polymère expansé agissent par leur perméabilité à l'air de manière à favoriser le fonctionnement du polymère activé de l'élément inférieur 3 en production de froid par désorption de l'eau absorbée.

On notera aussi que pendant tout le temps de l'utilisation de l'emballage, en moyen de transport ou en moyen de présentation sur le lieu de vente, les deux éléments absorbants conservent leurs capacités respectives à des fonctions bien distinctes. Ceci est obtenu par le fait que si l'eau peut passer de l'un à l'autre à travers leurs parois en contact, les particules elles ne peuvent jamais traverser ces parois, même quand elles pourraient tendre à être éjectées lors de leur gonflement par absorption d'eau ou, au contraire, à se mouvoir librement après s'être asséchées.

## Revendications

1. Emballage réfrigérant pour produits reposant sur lit de glace, **caractérisé en ce qu**'il est essentiellement constitué d'un conteneur (1) formé d'une caisse en matériau thermiquement isolant à couvercle amovible, dont une paroi de fond est doublée intérieurement de deux éléments amovibles superposés, à savoir un élément inférieur (3) à capacité essentiellement réfrigérante se disposant sur ladite paroi de fond en dessous d'un élément supérieur (8) à capacité principalement absorbante recevant la glace (11), et en ce que ledit élément supérieur est constitué de particules (10) d'un polymère absorbant susceptibles d'être activées par absorption d'eau pour être ensuite productrices de froid par désorption d'eau à l'état vapeur, mais qui sont initialement à l'état sec et présentes en quantité suffisante pour absorber en totalité l'eau libérée à l'état liquide par la fonte de la glace initialement contenue dans l'emballage, au moins celle libérée pendant le transport du lieu d'emballage au lieu de vente desdits produits, tandis que ledit élément inférieur (3) est essentiellement à capacité réfrigérante, par le fait qu'il comporte, à l'intérieur de parois (4) perméables à l'eau qui le délimitent, des particules (7) d'un polymère absorbant préalablement activé par absorption d'eau et éventuellement refroidissement, de telle sorte qu'il est producteur de froid par désorption de l'eau absorbée.

2. Emballage selon la revendication 1, dans lequel les parois du conteneur sont en un matériau poreux, perméable à l'air, de telle sorte que ledit élément inférieur est actif dans sa fonction de réfrigération par désorption d'eau à l'état vapeur à travers les parois du conteneur, notamment à travers ladite paroi de fond, quand le conteneur est ouvert pour exposer les produits sur le lieu de vente.

3. Emballage réfrigérant selon la revendication 1 ou 2, dans lequel la quantité de glace initialement introduite dans le conteneur est suffisante pour qu'il subsiste encore un lit de glace non fondu en fin du transport des produits, quand le conteneur est ouvert pour exposition des produits à la vente.

4. Emballage réfrigérant selon la revendication 1, 2, ou 3, dans lequel l'élément inférieur est mis en place sur la paroi de fond du conteneur après avoir été refroidi à la température de congélation de l'eau imprégnant les particules de polymère absorbant qui le constituent.

5. Emballage réfrigérant selon l'une quelconque des revendications précédentes, dans lequel au moins l'élément inférieur et éventuellement aussi l'élément supérieur, se présentent sous forme d'une bande aplatie comportant une pluralité de compartiments reliés entre eux par des lignes de découpe prédéfinies, notamment constituées par des lignes de soudure continues.

6. Emballage réfrigérant selon l'une quelconque des revendications 1 à 5, **caractérisé en ce que** ledit élément supérieur (8) comporte des moyens pour maintenir une répartition uniforme en son intérieur de particules de polymère (10) aptes à absorber l'eau libérée par fusion de la glace la surmontant, lesdites particules (10) pouvant notamment être maintenues par collage les unes aux autres, ledit collage étant réalisé de manière telle qu'il est détruit par contact avec l'eau froide libérée de la glace.

7. Emballage réfrigérant pour le transport de produits à conserver reposant sur une couche de glace, **caractérisé en ce qu**'il comporte essentiellement :
- un conteneur (1) à couvercle amovible et à parois thermiquement isolantes, recevant avec lesdits produits une quantité de glace suffisante pour qu'il subsiste de la glace non fondue en fin du transport des produits emballés depuis le lieu d'emballage jusqu'au lieu de vente, dont les parois sont en un matériau thermiquement isolant et poreux pour être perméables à la vapeur d'eau,
et deux éléments amovibles se plaçant superposés sur une paroi de fond du conteneur, à l'intérieur de ce dernier, dont :
- un élément inférieur (3) se disposant sur ladite paroi de fond et comportant, retenues à l'intérieur de parois (4) perméables à l'eau qui le délimitent, des particules (7) d'un polymère absorbant qui ont été activées par absorption d'eau, préalablement à la mise en place de l'élément dans le conteneur, ledit élément inférieur étant ainsi apte à agir en production de froid par vaporisation et désorption de l'eau absorbée,
- et un élément supérieur (8) destiné à recevoir la couche de glace (11), qui est essentiellement constitué de particules (10) d'un polymère absorbant susceptibles d'être activées par absorption d'eau pour être ensuite productrices de froid par désorption d'eau à l'état vapeur, mais qui sont initialement à l'état sec et présentes en quantité suffisante pour absorber au moins toute l'eau issue de la fonte de ladite glace (11) durant le transport du conteneur fermé,
et en ce que les parois dudit conteneur sont en un matériau poreux perméable à la vapeur d'eau se libérant par désorption des particules de l'élément inférieur quand celui-ci agit en producteur de froid sur un lieu de vente où les produits sont présentés sur lit de glace dans ledit conteneur une fois ouvert.

8. Procédé de préparation d'un emballage réfrigérant pour le transport de produits (12) à conserver reposant sur une couche de glace (11) tels que des produits de poissonnerie, **caractérisé en ce qu'**il comprend :
- la fabrication d'une bande formant une pluralité d'éléments inférieurs (3) reliés entre eux par des lignes de découpe prédéfinies, chacun desdits éléments (3) comportant, à l'intérieur de parois (4) au moins en partie perméables à l'eau qui le délimitent, des particules (7) d'un polymère absorbant qui, lorsqu'il est activé par absorption d'eau et éventuellement refroidissement, agit en producteur de froid par vaporisation et désorption de l'eau absorbée, lesdites particules (7) se trouvant à l'état sec et lesdites parois (4) étant assemblées de manière à former une pluralité de compartiments (6) de forme allongée à l'intérieur desquels sont distribuées de façon sensiblement uniforme lesdites particules (7),
- la fabrication d'une bande formant une pluralité d'éléments supérieurs (8) reliés entre eux par des lignes de découpe prédéfinies, chacun desdits éléments (8) comportant, à l'intérieur de parois (9) au moins en partie perméables à l'eau qui le délimitent, des particules (10) d'un polymère absorbant ayant la capacité, lorsqu'il est activé par absorption d'eau froide, de maintenir du froid par vaporisation et désorption de l'eau absorbée, lesdites particules (10) se trouvant à l'état sec et ledit élément supérieur (8) comportant en outre des moyens pour maintenir une répartition uniforme en son intérieur desdites particules (10),
- la découpe d'un élément inférieur (3) et d'un élément supérieur (8) respectivement à partir de chacune desdites bandes et suivant lesdites lignes de découpe,
- l'activation desdites particules de polymère (7) dudit élément inférieur (3) par immersion dudit élément (3) dans l'eau, suivie éventuellement d'un refroidissement à température de congélation,
- la disposition dudit élément inférieur (3) ainsi activé à l'intérieur d'un conteneur (1) thermiquement isolant à couvercle amovible, de manière à constituer une double-paroi à capacité réfrigérante occupant au moins une paroi de fond dudit conteneur (1),
- et la disposition dudit élément supérieur (8), sans activation préalable dudit polymère qu'il contient, sur ledit élément inférieur (3), de manière à constituer une couche de fond pour ledit conteneur (1) destinée à recevoir ladite couche de glace et capable d'absorber l'eau issue de la fonte de ladite glace (11), éventuellement aussi celle qui peut être dégorgée par lesdits produits (12) à transporter.

## Claims

1. Refrigerated packaging for products resting on a bed of ice, **characterized in that** it essentially comprises a container (1) formed of a box made of a thermally insulating material with a detachable lid, whereof a bottom wall is lined on the inside with two stacked detachable elements, namely a lower element (3) of essentially refrigerant capacity that is placed on said bottom wall underneath an upper element (8) of mainly absorbent capacity receiving the ice (11), and **in that** said upper element comprises particles (10) of an absorbent polymer that can be activated by absorption of water so as to be then productive of cold through desorption of water as steam, but which are initially in a dry state and present in sufficient quantity to absorb all the water released in the liquid state through the melting of the ice initially contained in the packaging, at least that released when said products are being transported from the point of packaging to the point of sale, whereas said lower element (3) is of essentially refrigerant capacity, through the fact that it comprises, inside water permeable walls (4) which define it, particles (7) of an absorbent polymer previously activated through absorption of water and possibly cooling, in such a way that it is productive of cold through desorption of the water absorbed.

2. Packaging according to claim 1, wherein the walls of the container are made of a porous, air permeable material, in such a way that said lower element is active in its refrigeration function through desorption of water as steam through the walls of the container, particularly through said bottom wall, when the container is opened to expose the products at the point of sale.

3. Refrigerated packaging according to claim 1 or 2, wherein the quantity of ice initially introduced into the container is sufficient for there still to be a bed of unmelted ice at the end of product transportation, when the container is opened to expose the products for sale.

4. Refrigerated packaging according to claim 1, 2 or 3, wherein the lower element is put in place on the bottom wall of the container after being cooled to the freezing point of the water impregnating the absorbent polymer particles comprising it.

5. Refrigerated packaging according to any one of the previous claims, wherein at least the lower element and possibly also the upper element, are presented in the form of a flattened strip comprising a plurality of compartments connected to each other by predefined cutting lines, consisting in particular of continuous weld lines.

6. Refrigerated packaging according to any one of claims 1 to 5, **characterized in that** said upper element (8) comprises means for maintaining a uniform distribution, in the inside thereof, of polymer particles (10) capable of absorbing the water released through the melting of the ice surmounting it, said particles (10) being able in particular to be maintained by being bonded to each other, said bonding being achieved such that it is destroyed through contact with the cold water released from the ice.

7. Refrigerated packaging for the transportation of products for preservation resting on a layer of ice, **characterized in that** it essentially comprises:
- a container (1) with a detachable lid and with thermally insulating walls, receiving with said products a sufficient quantity of ice for there still to be unmelted ice at the end of transportation of the packaged products from the point of packaging to the point of sale, whereof the walls are made of a thermally insulating and porous material so as to be permeable to steam.
and two detachable elements that are placed one on top of the other on a bottom wall of the container, on the inside thereof, including:
- a lower element (3) that is placed on said bottom wall and comprises, held inside water permeable walls (4) which define it, particles (7) of an absorbent polymer which have been activated through absorption of water, prior to the element being put in place in the container, said lower element being thus capable of acting to produce cold through vaporization and desorption of the water absorbed,
- and an upper element (8) intended to receive the layer of ice (11), which essentially comprises particles (10) of an absorbent polymer that can be activated through absorption of water so as then to be productive of cold through desorption of water as steam, but which are initially in a dry state and present in sufficient quantity to absorb at least all the water produced by the melting of the said ice (11) during transportation of the closed container,
and **in that** the walls of said container are made of a porous material permeable to the steam that is released through desorption of the particles of the lower element when the latter is acting to produce cold at the point of sale where the products are presented on a bed of ice in said container once opened.

8. Method of preparing a refrigerated package for the transportation of products (12) for preservation resting on a layer of ice (11) such as fish trade products, **characterized in that** it includes:
- manufacturing a strip forming a plurality of lower elements (3) connected to each other by predefined cutting lines, each of said elements (3) comprising, inside walls (4) that are at least partly permeable to water, and which define it, particles (7) of an absorbent polymer which, when it is activated through absorption of water and possibly cooling, acts to produce cold through vaporization and desorption of the water absorbed, said particles (7) being in a dry state and said walls (4) being assembled so as to form a plurality of compartments (6) in an elongated shape inside which said particles (7) are distributed in a substantially uniform way,
- manufacturing a strip forming a plurality of upper elements (8) connected to each other by predefined cutting lines, each of said elements (8) comprising, inside walls (9) that are at least partly permeable to water, and which define it, particles (10) of an absorbent polymer that has the capacity, when it is activated through absorption of cold water, to maintain cold through vaporization and desorption of the water absorbed, said particles (10) being in a dry state and said upper element (8) additionally comprising means to maintain a uniform distribution, in the inside thereof, of said particles (10),
- cutting a lower element (3) and an upper element (8) respectively from each of said strips and along said cutting lines,
- activating said polymer particles (7) of said lower element (3) through immersion of said element (3) in the water, possibly followed by cooling to the freezing point,
- placing said lower element (3) so activated inside a thermally insulating container (1) with a detachable lid, so as to constitute a double wall of refrigerant capacity occupying at least a bottom wall of said container (1),
- placing said upper element (8), without prior activation of said polymer which it contains, over said lower element (3), so as to form a bottom layer for said container (1) intended to receive said layer of ice and capable of absorbing the water produced by the melting of said ice (11), and possibly also any that may discharged by said products (12) for transportation.

## Patentansprüche

1. Kühlverpackung für auf einem Eisbett liegende Produkte, **dadurch gekennzeichnet, dass** sie im wesentlichen einen Behälter (1) umfasst, der aus einem Kasten aus thermisch isolierendem Material mit abnehmbarem Deckel besteht, dessen eine Bodenwand innen durch zwei aufeinander liegende herausnehmbare Elemente verdoppelt wird, nämlich ein unteres Element (3) mit im wesentlichen kühlender Wirkung, das auf der Bodenwand unterhalb eines oberen Elements (8) mit im wesentlichen absorbierender Wirkung aufliegt, welches das Eis (11) aufnimmt, und **dadurch gekennzeichnet, dass** das obere Element aus Partikeln (10) eines absorbierenden Polymers besteht, welche geeignet sind, durch Wasserabsorption aktiviert zu werden und dann durch Desorption von Wasser im Dampfzustand Kälte erzeugen, wobei die Partikel jedoch ursprünglich im trockenen Zustand vorliegen und in ausreichender Menge vorhanden sind, um das Wasser, das durch Auftauen des in der Verpackung ursprünglich enthaltenen Eises in flüssigem Zustand freigesetzt wird, ganz zu absorbieren, zumindest das beim Transport vom Verpackungsort zum Ort des Verkaufs der Produkte freigesetzte Wasser, während das untere Element (3) eine im wesentlichen kühlende Wirkung aufweist, bedingt **dadurch**, dass es innerhalb der Wände (4), die für das sie umschließende Wasser durchlässig sind, Partikel (7) eines absorbierenden Polymers umfasst, das zuvor durch Wasserabsorption und möglicherweise Abkühlen aktiviert wurde, so dass es durch Desorption des absorbierten Wassers Kälte erzeugt.

2. Verpackung nach Anspruch 1, bei der die Wände des Behälters aus einem porösen Material bestehen, das luftdurchlässig ist, so dass das untere Element in seiner Kühlungsfunktion durch Desorption von im Dampfzustand durch die Wände des Behälters tretenden Wassers aktiv ist, insbesondere durch besagte Bodenwand, wenn der Behälter geöffnet wird, um die Produkte am Verkaufsort auszustellen.

3. Kühlverpackung nach Anspruch 1 oder 2, bei der die ursprünglich in den Behälter eingegebene Eismenge ausreicht, damit am Ende des Transportes der Produkte, wenn der Behälter für deren Ausstellung zum Verkauf geöffnet wird, noch ein nicht geschmolzenes Eisbett verbleibt.

4. Kühlverpackung nach Anspruch 1, 2 oder 3, bei der das untere Element auf der Bodenwand des Behälters angebracht wird, nachdem es auf die Gefriertemperatur des Wassers gekühlt worden ist, das die absorbierenden Polymerpartikel imprägniert, die das Element bilden.

5. Kühlverpackung nach einem der vorhergehenden Ansprüche, bei der mindestens das untere Element und möglicherweise auch das obere Element in Form eines abgeflachten Bandes ausgeführt ist, das eine Vielzahl von Fächern umfasst, die miteinander durch vordefinierte Schnittlinien verbunden sind, die insbesondere aus durchgehenden Schweißnähten bestehen.

6. Kühlverpackung nach einem der Ansprüche 1 bis 5, **dadurch gekennzeichnet, dass** das obere Element (8) mit Mitteln versehen ist, die in seinem Innern eine gleichmäßige Verteilung der Polymerpartikel (10) aufrechterhalten, die geeignet sind, das Wasser zu absorbieren, das durch Schmelzen des das Wasser überragenden Eises freigesetzt wird, wobei die Partikel (10) insbesondere durch gegenseitiges Aneinanderkleben aufrechterhalten werden können und dieses Aneinanderkleben auf eine Weise erfolgt, dass es durch Kontakt mit dem vom Eis freigesetzten kalten Wasser zerstört wird.

7. Kühlverpackung für den Transport von auf einer Eisschicht liegenden, zu konservierenden Produkten, **dadurch gekennzeichnet, dass** sie im Wesentlichen folgendes umfasst:
- einen Behälter (1) mit abnehmbarem Deckel und thermisch isolierenden Wänden, der mit den besagten Produkten eine ausreichende Menge Eis aufnimmt, damit am Ende des Transportes der verpackten Produkte vom Verpackungsort zum Verkaufsort noch ungeschmolzenes Eis verbleibt, wobei die Wände des Behälters aus porösem, thermisch isolierendem Material bestehen, um wasserdampfdurchlässig zu sein,
und zwei herausnehmbare Elemente, die auf einer Bodenwand des Behälters in dessen Innerem übereinander angebracht sind und folgendes umfassen:
- ein unteres Element (3), das auf der Bodenwand aufliegt und Partikel (7) eines absorbierenden Polymers umfasst, die innerhalb der Wände (4) zurückgehalten werden, welche für das sie umschließende Wasser durchlässig sind, wobei die Partikel vor dem Einbringen des Elementes in den Behälter durch Wasserabsorption aktiviert worden sind, so dass das untere Element somit geeignet ist, durch Verdampfung und Desorption des absorbierten Wassers Kälte zu erzeugen,
- und ein oberes Element (8), das zur Aufnahme der Eisschicht (11) bestimmt ist und im Wesentlichen aus Partikeln (10) eines absorbierenden Polymers besteht, das geeignet ist, durch Wasserabsorption aktiviert zu werden und anschließend durch Desorption von Wasser im Dampfzustand Kälte zu erzeugen, wobei die Partikel jedoch ursprünglich im trockenen Zustand vorliegen und in ausreichender Menge vorhanden sind, um zumindest das gesamte Wasser zu absorbieren, das durch Auftauen des Eises (11) beim Transport des geschlossenen Behälters entstanden ist,
und **dadurch gekennzeichnet, dass** die Wände des Behälters aus porösem Material bestehen, das für Wasserdampf durchlässig ist, der durch Desorption der Partikel des unteren Elements freigesetzt wird, wenn dieses Element an einem Verkaufsort, wo die Produkte auf einem Eisbett in dem nunmehr geöffneten Behälter ausgestellt werden, Kälte erzeugend wirkt.

8. Verfahren zur Vorbereitung einer Kühlverpackung für den Transport von auf einer Eisschicht (11) liegenden, zu konservierenden Produkten (12), beispielsweise Fischprodukten, **dadurch gekennzeichnet, dass** es Folgendes umfasst:
- die Herstellung eines Bandes, das eine Vielzahl von unteren Elementen (3) bildet, die miteinander durch vordefinierte Schnittlinien verbunden sind, wobei jedes der Elemente (3) innerhalb der Wände (4), zumindest in dem Teil, der für das sie umschließende Wasser durchlässig ist Teil, Partikel (7) eines absorbierenden Polymers enthält, das nach erfolgter Aktivierung durch Wasserabsorption und möglicherweise Abkühlen als Kälteerzeuger wirkt, und zwar durch Verdampfung und Desorption des absorbierten Wassers, wobei sich die Partikel (7) im trockenen Zustand befinden und die Wände (4) so zusammengesetzt sind, dass sie eine Vielzahl von Fächern (6) in länglicher Form bilden, in deren Innern besagte Partikel (7) ungefähr gleichmäßig verteilt sind,
- die Herstellung eines Bandes, das eine Vielzahl von oberen Elementen bildet (8), die miteinander durch vordefinierte Schnittlinien verbunden sind, wobei jedes der Elemente (8) innerhalb der Wände (9) zumindest in dem Teil, der für das sie umschließende Wasser durchlässig ist, Partikel (10) eines absorbierenden Polymers enthält, welches nach erfolgter Aktivierung durch Absorption des kalten Wassers in der Lage ist, durch Verdampfung und Desorption des absorbierten Wassers die Kälte zu bewahren, wobei sich die Partikel (10) im trockenen Zustand befinden und das obere Element (8) außerdem Mittel umfasst, die in seinem Innern eine gleichmäßige Verteilung der Partikel (10) aufrechterhalten,
- das Abschneiden eines unteren Elements (3) und eines oberen Elements (8) jeweils von den Bändern und entlang der Schnittlinien,
- die Aktivierung der Polymerpartikel (7) des unteren Elements (3) durch Eintauchen des Elements (3) in Wasser und möglicherweise anschließendes Abkühlen auf die Gefriertemperatur,
- das Einbringen des auf diese Weise aktivierten unteren Elements (3) in einen thermisch isolierenden Behälter (1) mit abnehmbarem Deckel, so dass eine Doppelwand mit kühlender Wirkung gebildet wird, die zumindest eine Bodenwand des besagten Behälters (1) besetzt,
- und die Anordnung des oberen Elements (8), ohne vorherige Aktivierung des darin enthaltenen Polymers, auf dem unteren Element (3), so dass eine Bodenschicht für den Behälter (1) gebildet wird, die dazu bestimmt ist, die Eisschicht aufzunehmen, und in der Lage ist, das Wasser zu absorbieren, welches infolge des Auftauens des Eises (11) entsteht, und gegebenenfalls auch jenes, das aus den zu transportierenden Produkten (12) austritt.
